# EUROPÄISCHE PATENTSCHRIFT

(11) **EP 1 245 934 B1**
(45) Veröffentlichungstag und Bekanntmachung des Hinweises auf die Patenterteilung: **03.10.2007**
(21) Anmeldenummer: 02004048.1
(22) Anmeldetag: 23.02.2002
(51) Int. Cl.: G01F 1/12, G01F 1/08

(54) **Turbinenradgaszähler**
Turbine gas meter
Compteur à gaz à turbine

(30) Priorität: 31.03.2001 DE 10116297
(43) Veröffentlichungstag der Anmeldung: 02.10.2002
(73) Patentinhaber: Actaris Gaszählerbau GmbH, 76185 Karlsruhe (DE)
(72) Erfinder: Einhaus, Manfred, 76189 Karlsruhe (DE); Hec, Michel, 76135 Karlsruhe (DE)
(74) Vertreter: Feray, Valérie

(56) Entgegenhaltungen:
- DE-A- 2 551 672
- DE-A- 3 021 237
- GB-A- 981 276
- US-A- 5 866 824

## Beschreibung

Die Erfindung betrifft einen Turbinenradgaszähler nach dem Oberbegriff der Patentansprüche 1 bzw. 3.

Derartige Turbinenradgaszähler - im folgenden kurz "Gaszähler" genannt - werden wegen ihrer metrologischen Stärken häufig verwendet. Wie andere mechanische Zähler auch können sie jedoch durch den Zustand des Gases, wie z. B. Verunreinigungen, Druckstöße und Überlastung, sowie durch falsche Bedienung beschädigt werden. Mechanische Funktionsstörungen führen zu falscher Messung und sind auch nicht ohne weiteres, sondern möglicherweise erst bei einer Nacheichung erkennbar.

Um dieses Problem zu beseitigen, weist der bekannte Gaszähler nach der DE 30 21 237 C2 einen Referenzrotor in Form eines zweiten Turbinenrades auf, wobei beide Turbinenräder auf getrennten Wellen hintereinander gelagert sind. Durch die Verwendung des Referenzrotors werden eine Selbstkorrektur und eine Anzeige von Fehlfunktionen ermöglicht. Allerdings verlängert der Referenzrotor die Baulänge des Gaszählers.

Aufgabe der Erfindung ist es, den eingangs geschilderten Gaszähler so zu gestalten, daß er mit normaler Baulänge auskommt.

Diese Aufgabe wird entsprechend den kennzeichnenden Merkmalen der Patentansprüche 1 bzw. 3 gelöst.

Durch die Maßnahmen der Patentansprüche 1 und 3 läßt sich eine Fehlfunktion des Gaszählers feststellen und entsprechend anzeigen. Außerdem wird die Möglichkeit geboten, weiter zu messen, auch wenn dies mit verminderter Genauigkeit geschieht, da aufgrund des mindestens einen, eine vergrößerte Reibung aufweisenden Wälzlagers, das dann wirksam wird, bei kleinen Gasdurchsatzmengen die Ansprache des Gaszählers entsprechend herabgesetzt ist.

Weitere Ausgestaltungen der Erfindung sind der nachfolgenden Beschreibung und den Unteransprüchen zu entnehmen.

Die Erfindung wird nachstehend anhand von in den beigefügten Abbildungen dargstellten Ausführungsbeispielen näher erläutert.

Fig. 1 zeigt schematisch ausschnittweise und im Schnitt eine Ausführungsform eines Gaszählers.

Fig. 2 zeigt schematisch ausschnittweise und im Schnitt eine weitere Ausführungsform eines Gaszählers.

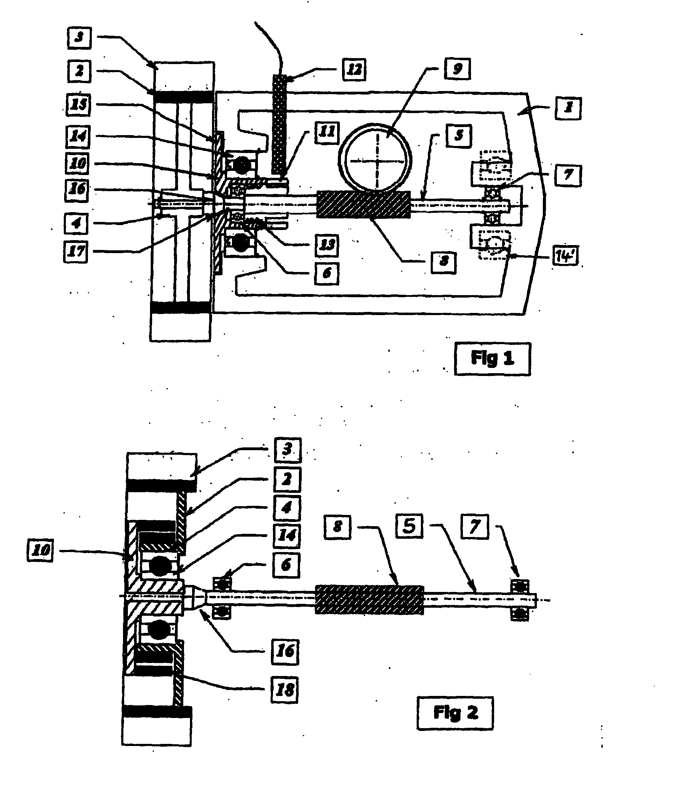

Der in Fig. 1 dargestellte Turbinenradgaszähler - im folgenden weiter "Gaszähler" - umfaßt ein in eine Rohrarmatur einbaubares Gehäuse 1, in dem sich anströmseitig ein Turbinenrad 2 befindet, das am Außenumfang Flügel 3 trägt. Das Turbinenrad 2 sitzt mit seiner Nabe 4 auf einer Turbinenradwelle 5, die über im Bereich ihrer beiden axialen Enden angeordnete, hochpräzise und reibungsarme Wälzlager 6 und 7, die dementsprechend aufgrund relativ kleiner Kugeln empfindlich sind, in dem Gehäuse 1 koaxial zur Rohrarmatur gelagert ist, um einen möglichst großen Meßbereich abdecken zu können. Hierbei ist das dem Turbinenrad 2 abgewandte Wälzlager 7 ein Loslager.

Auf der Turbinenradwelle 5 befindet sich eine Schnecke 8, die mit einem Schneckenrad 9 in Eingriff steht, das über weitere Glieder einer kinematischen Kette, die auch eine Magnetkupplung umfassen kann, mit einem nicht dargestellten Zählerkopf, der außerhalb des Durchflußkanals der Rohrarmatur angeordnet ist, verbunden ist (wie es beispielsweise in DE 30 21 237 C2 beschrieben ist, wobei wie in dieser Schrift gegebenenfalls auch ein segmentiertes, mit einem gehäusefesten Sensor zusammenarbeitendes Meßrad auf der Turbinenradwelle 5 angeordnet sein kann).

Hierbei ist das dem Turbinenrad 2 benachbarte Wälzlager 6 innerhalb eines hülsenförmigen Referenzrotors 10 gelagert, der an der dem Turbinenrad 2 abgekehrten Seite in Axialrichtung mit Schlitzen 11 versehen ist, deren Vorbeilauf von einem gehäusefesten Sensor 12 abgetastet wird. Das Wälzlager 6 ist über eine Feder 13 in Richtung auf das Turbinenrad 2 gegen eine Schulter in dem Referenzrotor 10 vorgespannt.

Der Referenzrotor 10 ist über ein Wälzlager 14 in dem Gehäuse 1 gelagert, wobei das Wälzlager 14 um das zum Turbinenrad 2 benachbarte Wälzlager 6 herum angeordnet ist, so daß der Referenzrotor 10 koaxial zur Turbinenradwelle 5 gelagert ist. Das Wälzlager 14 ist gegenüber den Wälzlagern 6 und 7 relativ schwergängig, besitzt große Kugeln und ist dementsprechend robust. Die Schwergängigkeit kann gegebenenfalls noch durch zusätzliche Maßnahmen, wie das Vorsehen einer Deckscheibe 15 am Referenzrotor 10 und/oder durch Verwendung spezieller Schmiermittel für das Wälzlager 14, erhöht werden.

Wenn zusätzliche Reibung oder eine Blockierung im Wälzlager 6 auftritt, wie es bei Druckstößen und Verschmutzung leicht passieren kann, so daß eine definierte Reibung überschritten wird, fängt der Referenzrotor 10 an zu drehen. Diese Drehung wird durch den Sensor 12 überwacht und mittels der mitdrehenden Schlitze 11 erfaßt. Dies kann zur Fehlermeldung verwendet werden. Abgesehen davon kann die Gaszählerfunktion insofern aufrecht erhalten werden.

Um Gasstößen besser begegnen zu können, ist die Turbinenradwelle 5 benachbart zum Referenzrotor 10 mit einem Kegelabschnitt 16 versehen, dem eine mit geringem Abstand hierzu angeordnete, korrespondierende konusförmige Fangfläche 17 des Referenzrotors 10 entspricht. Bei einem Druckstoß erfolgt eine axiale Verschiebung des Wälzlagers 6 mit der Turbinenradwelle 5, welche durch die Feder 13 abgefangen wird, so daß die Gefahr, daß dieses beschädigt wird, erheblich vermindert wird. Die Feder 13 dient außerdem dazu, daß nach einem Druckstoß die Ausgangslage wieder erreicht wird. Bei extremen Druckstößen oder totaler Zerstörung des Wälzlagers 6 wird die Turbinenradwelle 5, welche mit dem Kegelabschnitt 16 versehen ist, über die am Referenzrotor 10 angebrachte konusförmige Fangfläche 17 aufgefangen.

Der Referenzrotor 10 kann auch an der dem Turbinenrad 2 abgewandten Seite der Turbinenradwelle 5 angeordnet und dort über ein entsprechendes, in Fig. 1 strichpunktiert angedeutetes Wälzlager 14' gelagert sein, das um das Wälzlager 7 herum angeordnet ist. Auch kann der Referenzrotor 10 über zwei entsprechende Wälzlager 14 und 14' gelagert sein.

Bei der in Fig. 2 dargestellten Ausführungsform des Gaszählers übernimmt das Turbinenrad 2 mit den Flügeln 3 direkt die Aufgabe des Referenzrotors, wobei das Wälzlager 14 zwischen Nabe 4 und Turbinenrad 2 sitzt. Außerdem ist zwischen der Nabe 4 und dem Turbinenrad 2 eine Kupplung 18 angeordnet, insbesondere eine Magnetkupplung. Es kann sich aber auch um eine Reibkupplung handeln. Über die Kupplung 18 sind das Turbinenrad 2 und die Turbinenradwelle 5 gekoppelt. Tritt erhöhte Reibung oder Blockieren in den Wälzlagern 6 und 7, der Kupplung 18 oder dem Zählwerk auf, dann dreht sich von einem definierten Reibwert an die Turbinenradwelle 5 gegenüber dem Turbinenrad 2, wobei die Fehlererkennung durch den Vergleich von zwei hochfrequenten Impulsgebern als Sensoren 12 vorgenommen wird, von denen einer die Impulse am Turbinenrad 2 und der andere an einer beliebigen Stelle der Getriebekette abnimmt.

Bei beiden Ausführungsformen zentriert der Kegelabschnitt 16 die Turbinenradwelle 5, wenn das Wälzlager 6 zerstört wird und die auf die Turbinenradwelle 5 ausgeübte Kraft größer als die Kraft der Feder 13 ist. Im Falle der in Fig. 2 dargestellten Ausführungsform kann die kegelige Fangfläche 17 im Gehäuse 1 ausgebildet werden.

Bei den Sensoren 12 kann es sich um Reedkontakte, induktive oder kapazitive Impulsgeber oder um Wiegand-Drähte handeln.

## Patentansprüche

1. Turbinenradgaszähler, welcher ein Turbinenrad (2), das auf einer in einem Gehäuse (1) gelagerten Turbinenradwelle (5) sitzt, und einen koaxial zum Turbinenrad (2) gelagerten Referenzrotor (10) aufweist, bei welchem die Turbinenradwelle (5) im Bereich ihrer beiden axialen Enden jeweils in einem reibungsarmen Wälzlager (6,7) gelagert ist, bei welchem die Turbinenradwelle (5) über ein Getriebe (8,9) eines Meßwerks mit einem Zählerkopf gekoppelt ist, und bei welchem im Bereich des Referenzrotors (10)ein auf eine Drehung desselben ansprechender Sensor (12) angebracht ist, **dadurch gekennzeichnet,**
- **daß** der Referenzrotor (10) über wenigstens ein gegenüber den reibungsarmen Wälzlagern (6, 7) relativ schwergängiges Wälzlager (14) drehbar gelagert ist,
- **daß** der Referenzrotor (10) eine Hülse aufweist, die eines der reibungsarmen Wälzlager (6) der Turbinenradwelle (5) aufnimmt und
- **daß** der Sensor (12) im Bereich der Hülse angeordnet ist.

2. Turbinenradgaszähler nach Anspruch 1, **dadurch gekennzeichnet, daß** die Turbinenradwelle (5) benachbart zum Turbinenrad (2) einen Kegelabschnitt (16) aufweist, der mit einer korrespondierenden, kegeligen, axial beabstandeten Fangfläche (17) des Referenzrotors (10) in Eingriff bringbar ist, wobei das zum Turbinenrad benachbarte Wälzlager (6) in Richtung auf das Turbinenrad (2) mittels einer Feder (13) vorgespannt ist.

3. Turbinenradgaszähler, welcher ein Turbinenrad (2), das auf einer in einem Gehäuse (1) gelagerten Turbinenradwelle (5) angeordnet ist, und einen koaxial zum Turbinenrad (2) gelagerten Referenzrotor (10) aufweist, bei welchem die Turbinenradwelle (5) im Bereich ihrer beiden axialen Enden jeweils in einem reibungsarmen Wälzlager (6,7) gelagert ist, bei welchem die Turbinenradwelle (5) über ein Getriebe (8,9) eines Meßwerks mit einem Zählerkopf gekoppelt ist, und welcher eine auf eine relative Drehung zwischen Turbinenrad und Referenzrotor ansprechende Sensor vorrichtung (12) umfaßt, **dadurch gekennzeichnet,**
- **daß** der Referenzrotor (10) mit der Turbinenradwelle (5) verbunden und über ein bezüglich der reibungsarmen Wälzlager (6, 7) relativ schwergängiges Wälzlager (14) in der Nabe (4) des Turbinenrads (2) gelagert ist und
- **daß** zudem zwischen dem Turbinenrad (2) und dem Referenzrotor (10) eine Kupplung (18) vorgesehen ist.

4. Turbinenradgaszähler nach Anspruch 3, **dadurch gekennzeichnet, daß** die Kupplung (18) eine Magnetkupplung ist.

5. Turbinenradgaszähler nach einem der Ansprüche 1 bis 4, **dadurch gekennzeichnet, daß** zwei hochfrequente Impulsgeber als Sensoren vorgesehen sind, von denen einer Impulse am Turbinenrad (2) und der andere Impulse an einer beliebigen Stelle der Getriebekette abnimmt, wobei die Signale der beiden Sensoren zur Störungsermittlung bzw. zur Meßwertkorrektur vergleichbar sind.

## Claims

1. Turbine gas meter which has a turbine wheel (2), which sits on a turbine wheel shaft (5) mounted in a housing (1), and a reference rotor (10) which is mounted coaxially with respect to the turbine wheel (2), in which the turbine wheel shaft (5) is mounted in the region of its two axial ends in a respective low-friction rolling contact bearing (6, 7), in which the turbine wheel shaft (5) is coupled to a meter head via a gear (8, 9) of a measuring mechanism, and in which, in the region of the reference rotor (10), a sensor (12) which responds to a rotation of the same is fitted, **characterized**
- **in that** the reference rotor (10) is mounted rotatably via at least one rolling contact bearing (14) which moves relatively stiffly in comparison to the low-friction rolling contact bearings (6, 7),
- **in that** the reference rotor (10) has a sleeve which receives one of the low-friction rolling contact bearings (6) of the turbine wheel shaft (5), and
- **in that** the sensor (12) is arranged in the region of the sleeve.

2. Turbine gas meter according to Claim 1, **characterized in that** the turbine wheel shaft (5) has, adjacent to the turbine wheel (2), a conical section (16) which can be brought into engagement with a corresponding, conical, axially spaced-apart intercepting surface (17) of the reference rotor (10), with the rolling contact bearing (6) which is adjacent to the turbine wheel being prestressed in the direction of the turbine wheel (2) by means of a spring (13).

3. Turbine gas meter which has a turbine wheel (2), which is arranged on a turbine wheel shaft (5) mounted in a housing (1), and a reference rotor (10) which is mounted coaxially with respect to the turbine wheel (2), in which the turbine wheel shaft (5) is mounted in the region of its two axial ends in a respective low-friction rolling contact bearing (6, 7), in which the turbine wheel shaft (5) is coupled to a meter head via a gear (8, 9) of a measuring mechanism, and which comprises a sensor device (12) which responds to a relative rotation between turbine wheel and reference rotor, **characterized**
- **in that** the reference rotor (10) is connected to the turbine wheel shaft (5) and is mounted in the hub (4) of the turbine wheel (2) via a rolling contact bearing (14) which moves relatively stiffly with regard to the low-friction rolling contact bearings (6, 7), and
- **in that**, in addition, a coupling (18) is provided between the turbine wheel (2) and the reference rotor (10).

4. Turbine gas meter according to Claim 3, **characterized in that** the coupling (18) is a magnetic coupling.

5. Turbine gas meter according to one of Claims 1 to 4, **characterized in that** two high-frequency pulse generators are provided as the sensors, of which one records pulses at the turbine wheel (2) and the other records pulses at any desired location of the gear chain, with the signals of the two sensors being able to be compared in order to determine the disturbance or to correct the measured value.

## Revendications

1. Compteur de gaz à roue de turbine, qui présente une roue de turbine (2) qui repose sur un arbre de roue de turbine (5) logé dans un boîtier (1) et un rotor de référence (10) monté de manière coaxiale par rapport à la roue de turbine (2), l'arbre de roue de turbine (5) étant à chaque fois logé dans un palier à roulement (6, 7) à faible frottement dans la zone de ses extrémités axiales, l'arbre de roue de turbine (5) étant couplé à une tête de compteur par le biais d'un engrenage (8, 9) d'un mécanisme de mesure et un capteur (12) réagissant à une rotation du rotor de référence (10) étant monté à proximité de celui-ci, **caractérisé**
- **en ce que** le rotor de référence (10) est monté de manière à pouvoir tourner sur au moins un palier à roulement (14) relativement dur par rapport aux paliers à roulement (6, 7) à faible frottement,
- **en ce que** le rotor de référence (10) présente une douille qui reçoit un palier à roulement (6) à faible frottement de l'arbre de roue de turbine (5) et
- **en ce que** le capteur (12) est disposé dans la zone de la douille.

2. Compteur de gaz à roue de turbine selon la revendication 1, **caractérisé en ce que** l'arbre de roue de turbine (5) présente dans le voisinage de la roue de turbine (2) une portion conique (16) qui peut venir en prise avec une surface d'accueil (17) conique correspondante, espacée dans le sens axial, du rotor de référence (10), le palier à roulement (6) voisin de la roue de turbine étant précontraint au moyen d'un ressort (13) en direction de la roue de turbine (2).

3. Compteur de gaz à roue de turbine, qui présente une roue de turbine (2) qui est disposée sur un arbre de roue de turbine (5) logé dans un boîtier (1) et un rotor de référence (10) monté de manière coaxiale par rapport à la roue de turbine (2), l'arbre de roue de turbine (5) étant à chaque fois logé dans un palier à roulement (6, 7) à faible frottement dans la zone de ses extrémités axiales, l'arbre de roue de turbine (5) étant couplé à une tête de compteur par le biais d'un engrenage (8, 9) d'un mécanisme de mesure et comprenant un dispositif de détection (12) réagissant à une rotation relative entre la roue de turbine et le rotor de référence, **caractérisé**
- **en ce que** le rotor de référence (10) est relié à l'arbre de roue de turbine (5) et monté dans le moyeu (4) de la roue de turbine (2) par le biais d'un palier à roulement (14) relativement dur par rapport aux paliers à roulement (6, 7) à faible frottement, et
- **en ce qu'**un accouplement (18) est prévu entre la roue de turbine (2) et le rotor de référence (10).

4. Compteur de gaz à roue de turbine selon la revendication 3, **caractérisé en ce que** l'accouplement (18) est un accouplement magnétique.

5. Compteur de gaz à roue de turbine selon l'une des revendications 1 à 4, **caractérisé en ce que** les capteurs prévus sont deux générateurs d'impulsions à haute fréquence dont l'un prélève des impulsions au niveau de la roue de turbine (2) et l' autre prélève des impulsions en un endroit quelconque de la chaîne de transmission, les signaux des deux capteurs pouvant être comparés pour déterminer les défauts ou pour corriger la valeur mesurée.
